(19) Europäisches Patentamt

European Patent Office

Office européen des brevets

(11) **EP 1 732 313 A1**

(12) **EUROPEAN PATENT APPLICATION**

(43) Date of publication:
**13.12.2006 Bulletin 2006/50**

(51) Int Cl.:
***H04N 5/235*** (2006.01)

(21) Application number: **06252852.6**

(22) Date of filing: **01.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.06.2005 JP 2005170788**

(71) Applicant: **SONY CORPORATION
Tokyo (JP)**

(72) Inventor: **Kinoshita, Masaya
Shinagawa-ku,
Tokyo (JP)**

(74) Representative: **Nicholls, Michael John
J.A. KEMP & CO.
14, South Square
Gray's Inn
London WC1R 5JJ (GB)**

(54) **Image processing apparatus and image capture apparatus**

(57)    An image processing apparatus for processing an image signal includes: an integrator configured to acquire the image signal during each detection period having a length equal to or longer than one cycle of flicker occurring on an image under illumination of a fluorescent lamp, and integrate the acquired image signal in a unit of period equal to one horizontal synchronization period or longer; and a flicker detector configured to estimate a flicker component on the basis of a frequency analysis result obtained in the unit of the each detection period by using an integral result obtained by the integrator.

## FIG. 1

**Description**

Background of the Invention

1. Field of the Invention

The present invention relates to an image processing apparatus configured to process an image signal and an image capture apparatus provided with an image processing function, and more particularly to an image processing apparatus and an image capture apparatus suitable for processing of an image signal captured by an XY address type of solid-state image capture device.

2. Description of Related Art

When an image of a subject is captured by a video camera under illumination of a blinking light source such as a fluorescent lamp lit by a commercial AC power source, a temporal variation in brightness, i.e., fluorescent lamp flicker, is observed on the captured image owing to the difference between the frequency of a luminance variation (intensity variation) of the light source and the vertical synchronization frequency of the video camera. Particularly in the case where an XY address type of image capture device such as a CMOS (Complementary Metal Oxide Semiconductor) image sensor is used, exposure timing differs on each horizontal line, so that flicker on the captured image is observed as a stripe pattern due to vertical cyclic variations in luminance level or hue.

Two major methods for eliminating such a flicker component from a captured image signal are known. One of the two methods is a method of correcting an image signal on the basis of the relationship between shutter speed and flicker level (a shutter correction method), and the other is a method of detecting a flicker waveform and applying the inverse waveform to an image signal as correction gain (a gain correction method). As a flicker reduction method based on the gain correction method, there is a method of performing frequency analysis on a variation in the signal level of an image signal to detect the spectrum of a flicker frequency, and correcting the signal level of the image signal on the basis of an amplitude value of the spectrum (refer to, for example, Japanese Patent Application Publication No. 2004-222228, Paragraph Numbers 0072 to 0111, Fig. 4).

In recent years, to meet growing demands for higher functions in digital video cameras and the like, development has been conducted on cameras having the function of capturing an image of a subject at a picture rate higher than that of a standard television signal. A flicker reduction method in a camera having such a high-speed image capture function will be described below.

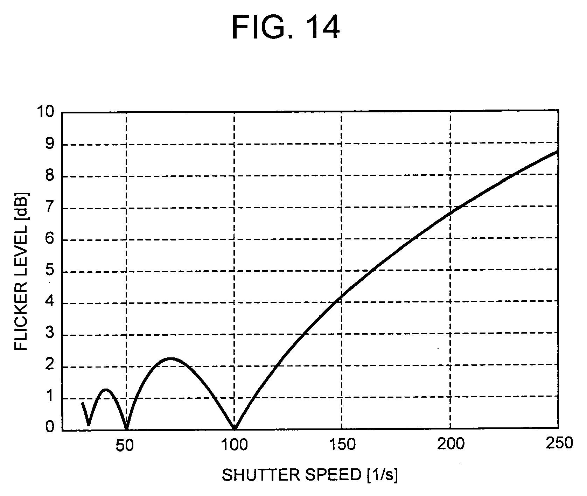

Fig. 14 is a graph showing the relationship between flicker level and shutter speed in the case where an image is captured under illumination of a fluorescent lamp by means of a camera having an XY address type of image capture device.

By way of example, Fig. 14 shows the result of a computer simulation of the relationship between flicker level and shutter speed in the case where an image is captured under illumination of a non-inverter type of fluorescent lamp in an area where the commercial AC power source frequency is 50 Hz. As shown in Fig. 14, there is a relationship between shutter speed and flicker level, and particularly when the shutter speed is N/100 (N is an integer), the occurrence of flicker can be completely prevented. If the power source frequency of the fluorescent lamp is represented by f[Hz], a flickerless shutter speed S_fkless[1/s] can be generally expressed by the following formula (1):

$$S\_fkless = N/(2 \times f) \qquad\qquad \cdots\ (1)$$

If the occurrence of flicker is detected by an arbitrary method, the shutter correction method avoids the occurrence of flicker by setting the shutter speed to S_fkless of formula (1), on the basis of the above-mentioned nature. However, this method has an issue such that since the shutter speed is limited, the degree of freedom of AE (Auto Exposure) control is lowered, and in addition, the method may not be used for the following reason.

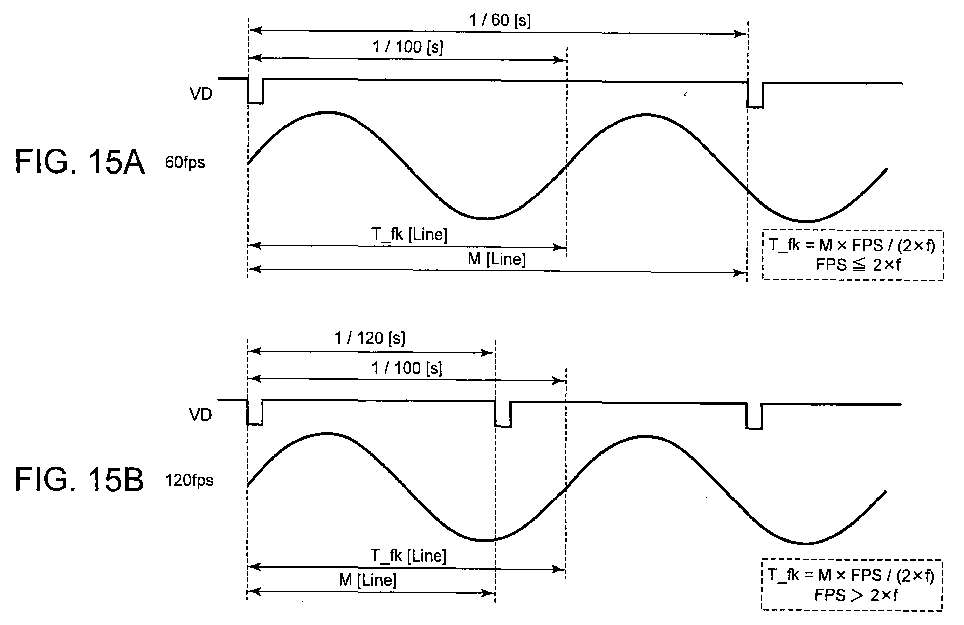

Figs. 15A and 15B are graphs respectively showing the relationships between vertical synchronization frequencies and flicker waveform during normal image capture and during high-speed image capture.

Fig. 15A shows the relationship between a flicker waveform and a vertical synchronizing signal VD of 60 fps (fields/second) which is a picture rate based on the NTSC (National Television Standards Committee) format. In this case, the vertical synchronization period is 1/60 [s], and one cycle of flicker strokes is 1/100 [s]. Fig. 15B shows the relationship between a flicker waveform and a vertical synchronizing signal in the case where high-speed image capture was performed at a picture rate (120 fps) twice as high as the standard rate by way of example. In this case, the vertical synchronization period is 1/120 [s], and one cycle of flicker strokes is 1/100 [s] as in the relationship shown in Fig. 15A.

Shutter speeds which can be set on a camera operative to capture an image at 120 fps are limited to speeds higher than 1/120 [s]. As the picture rate is made three times and four times that of the NTSC format, the settable shutter speeds become 1/180 [s] or less and 1/240 [s] or less, respectively. Accordingly, such a camera cannot avoid the occurrence of flicker by means of the shutter correction method.

In the following description, reference will be made to a case where the method of the above-mentioned Japanese Patent Application Publication Number 2004-222228 is applied to an image captured by such high-speed image capture. A detection system of this method is mainly represented by the following three steps: the step of sampling one cycle of a flicker component while processing an image in an appropriate form (step s1); the step of calculating a frequency spectrum of a flicker component whose fundamental wave is one cycle of flicker, by performing discrete Fourier transform (DFT) on the sampled data (step s1); and the step of estimating a flicker waveform by using only low-order terms (step S3).

However, the above-mentioned method may not be directly applied to high-speed image capture, because the sampling processing of step S1 is not suitable for high-speed image capture. If it is assumed here that the number of lines within the vertical synchronization period is represented by M, the relationship between the cycle $T\_fk$ of a flicker stripe and a picture rate FPS can be generally expressed by the following formula (2):

$$T\_fk = M \times FPS/(2 \times f) \qquad\qquad \cdots (2)$$

However, from formula (2), if high-speed image capture is performed on the condition of FPS > 2 x f, the relationship between the cycle of the flicker stripe and the number of lines becomes $T\_fk > M$, so that as is also apparent from Fig. 15B, flicker for one cycle may not be accommodated in one field. For this reason, the method of Japanese Patent Application Publication Number 2004-222228 may not correctly sample flicker components.

Summary of the Invention

As mentioned above, the method of Japanese Patent Application Publication Number 2004-222228 may not be applied to cameras having high-speed image capture functions. Not only the method of Japanese Patent Application Publication Number 2004-222228 but also a large number of flicker correction algorithms make use of the fact that a flicker phenomenon has repetition of pictures. For example, flicker components on an image captured in the NTSC format in an area using 50 Hz power have the nature that the same waveform appears after three fields, and the above-mentioned method utilizes this nature to perform the processing of extracting only a background component from the average value of the flicker components of three pictures. However, there is an issue such that since the number of repeated pictures differs for picture rates, this kind of algorithm may not be applied to high-speed image capture.

Accordingly, it is desirable to provide an image processing apparatus capable of detecting a flicker component in an image captured by an XY address type of a solid-state image capture device at high accuracy irrespective of picture rates. The present invention has been made in view of the above-mentioned issue.

Further, it is desirable to provide an image capture apparatus capable of detecting a flicker component in an image captured by an XY address type of solid-state image capture device at high accuracy irrespective of picture rates.

According to one embodiment of the present invention, there is provided an image processing apparatus configured to process an image signal, which includes integration means for acquiring an image signal during each detection period having a length equal to or longer than one cycle of flicker occurring on an image under illumination of a fluorescent lamp, and integrating the acquired image signal in a unit of period equal to one horizontal synchronization period or longer, and flicker detection means for estimating a flicker component on the basis of a frequency analysis result obtained in the unit of each detection period by using an integral result obtained by the integration means.

In the image processing apparatus according to the present embodiment, an image signal is acquired by the integration means during each detection period having a length equal to or longer than one cycle of flicker, and the image signal is integrated in a unit of period equal to one horizontal synchronization period or longer. Then, frequency analysis is performed by the flicker detection means in the unit of the detection period by using an integral result obtained by the integration means. Accordingly, the flicker analysis can be reliably performed on successive image signals containing one cycle of the flicker component, irrespective of the picture rate of the image signal, whereby improving the detection accuracy of flicker.

According to the image processing apparatus of the present invention, the integration means and the flicker detection means are adapted to operate on the basis of the detection period having a length equal to or longer than one cycle of flicker in such a way that the flicker analysis can be reliably performed on successive image signals containing one cycle of flicker components, irrespective of the picture rate of an image signal. Accordingly, it is possible to achieve highly accurate flicker detection without limitation from picture rates and without the need to greatly modify a widely known mechanisms of the integration means or the flicker detection means.

Brief Description of the Drawings

The present invention will become more readily appreciated and understood from the following detailed description of embodiments and examples of the present invention when taken in conjunction with the accompanying drawings, in which:

Fig. 1 is a block diagram showing the construction of essential sections of an image capture apparatus according to an embodiment of the present invention;
Fig. 2 is a block diagram showing the internal construction of a camera processing circuit of an image capture apparatus;
Fig. 3 is a timing chart aiding in explaining sampling operation performed in a normal image capture mode;
Fig. 4 is a first timing chart aiding in explaining sampling operation performed in a high-speed image capture mode;
Fig. 5 is a second timing chart aiding in explaining sampling operation performed in the high-speed image capture mode;
Fig. 6 is a block diagram showing the internal construction of a detection and reduction processing section of the image capture apparatus;
Fig. 7 is a block diagram showing the internal construction of an integral processing section according to a first embodiment of the present invention;
Fig. 8 is a block diagram showing a first example of the construction of a buffering section according to the first embodiment of the present invention;
Fig. 9 is a block diagram showing a second example of the construction of a buffering section according to the first embodiment of the present invention;
Fig. 10 is a block diagram showing the internal construction of the integral processing section according to a second embodiment of the present invention;
Fig. 11 is a graph showing an example of a flicker waveform estimated in the second embodiment of the present invention;
Fig. 12 is block diagram showing the internal construction of the integral processing section according to a third embodiment of the present invention;
Fig. 13 is a graph showing an example of a flicker waveform estimated in the third embodiment of the present invention;
Fig. 14 is a graph showing the relationship between flicker level and shutter speed in the case where an image is captured under illumination of a fluorescent lamp by means of a camera having an XY address type of image capture device; and
Figs. 15A and 15B are graphs respectively showing the relationships between vertical synchronization frequencies and flicker waveform during normal image capture and during high-speed image capture.

Detailed Description of the Embodiments

Embodiments of the present invention will be described below in detail with reference to the accompanying drawings.

<Construction of Entire System>

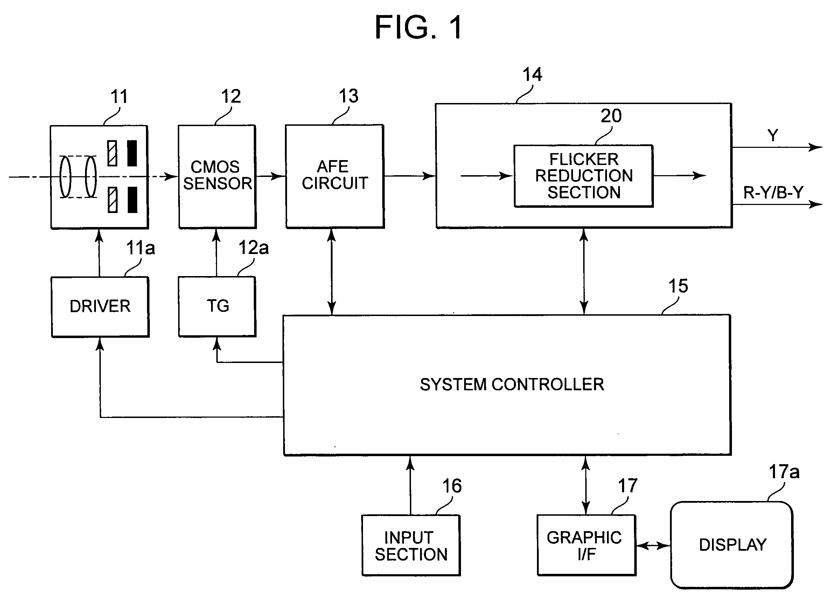

Fig. 1 is a block diagram showing the construction of essential sections of an image capture apparatus according to an embodiment of the present invention.
The image capture apparatus shown in Fig. 1 includes an optical block 11, a driver 11a, a CMOS image sensor (hereinafter referred to as the CMOS sensor) 12, a timing generator (TG) 12a, an analog front end (AFE) circuit 13, a camera processing circuit 14, a system controller 15, an input section 16, a graphic I/F (interface) 17, and a display 17a.
The optical block 11 includes a lens for focusing light from a subject onto the CMOS sensor 12, a drive mechanism for moving the lens to perform focusing and zooming, a shutter mechanism, an iris mechanism and the like. The driver 11a controls the drive of each of the mechanisms in the optical block 11 on the basis of control signals from the system controller 15.
The CMOS sensor 12 is formed by a plurality of pixels two-dimensionally arranged on a CMOS substrate, each of which is made of a photodiode (photogate), a transfer gate (shutter transistor), a switching transistor (address transistor), an amplifier transistor, a reset transistor (reset gate) and the like. The CMOS sensor 12 also has a vertical scanning circuit, a horizontal scanning circuit, an image signal output circuit and the like all of which are formed on the CMOS substrate. The CMOS sensor 12 is driven to convert light incident from the subject into an electrical signal, on the basis of a timing signal outputted from the TG 12a. The TG 12a outputs the timing signal under the control of the system controller 15.

The CMOS sensor 12 is provided with an image capture mode for capturing an image at a normal rate of 60 fps in accordance with NTSC specifications (hereinafter referred to as the normal image capture mode), and a high-speed image capture mode for capturing an image at a rate higher than 60 fps. During the output of pixel signals for one line, the CMOS sensor 12 adds to each of the pixel signals the signals of the neighboring pixels for the same color on the image sensor and outputs these pixel signals at the same time, thereby increasing the rate of picture switching without increasing the synchronous frequency at which the pixel signals are read. In addition, according to this construction, the CMOS sensor 12 can reduce an image size (resolution) without changing the angle of view.

The AFE circuit 13 is constructed as, for example, a single IC (Integrated Circuit). The AFE circuit 13 performs sample and hold on an image signal outputted from the CMOS sensor 12 by CDS (Correlated Double Sampling) processing so as to hold the S/N (Signal/Noise) ratio at a correct level, then controls the gain by AGC (Auto Gain Control) processing, and subsequently performs A/D conversion and outputs a digital image signal. In addition, a circuit for performing CDS processing may also be formed on the same substrate as the CMOS sensor 12.

The camera processing circuit 14 is formed as, for example, a single IC, and executes all or part of various kinds of camera signal processing, such as AF (Auto Focus), AE (Auto Exposure) and white balance adjustment, on the image signal outputted from the AFE circuit 13. The camera processing circuit 14 according to the embodiment is specially provided with a flicker reduction section 20 for reducing in the image signal a signal component of flicker which appears in the picture during image capture under fluorescent light.

The system controller 15 is a microcontroller constructed with, for example, aCPU (Central Processing Unit), a ROM (Read Only Memory) and a RAM (Random Access Memory), and collectively controls each section of the image capture apparatus by executing a program stored in the ROM.

The input section 16 is constructed with various kinds of operating keys such as a shutter release button, a lever, a dial and the like, and outputs a control signal corresponding to an input operation performed by a user to the system controller 15.

The graphic I/F 17 generates an image signal to be displayed on the display 17a from an image signal supplied from the camera processing circuit 14 via the system controller 15, and supplies the signal to the display 17a and causes the display 17a to display an image. The display 17a is made of, for example, a LCD (Liquid Crystal Display), and displays a camera through image being captured or a reproduced image based on data recorded on a recording medium which is not shown.

In the image capture apparatus, a signal received and photoelectrically converted by the CMOS sensor 12 is sequentially supplied to the AFE circuit 13, and is converted into a digital signal after having been subjected to CDS processing and AGC processing. The camera processing circuit 14 performs image quality correction on the digital image signal supplied from the AFE circuit 13, and finally converts the digital image signal into a luminance signal (Y) and color-difference signals (R-Y and B-Y) and outputs the luminance signal (Y) and the color-difference signals (R-Y and B-Y).

The image data outputted from the camera processing circuit 14 is supplied to the graphic I/F 17 via the system controller 15 and is converted into an image signal to be displayed, so that a camera through image is displayed on the display 17a. When the system controller 15 is instructed to record the image by an input operation provided at the input section 16 by the user or the like, the system controller 15 supplies the image data from the camera processing circuit 14 to an encoder which is not shown, and predetermined compression encoding is performed on the image data by the encoder and the encoded image data is recorded on the recording medium which is not shown. During recording of a still image, image data for one frame is supplied from the camera processing circuit 14 to the encoder, while during recording of a moving image, processed image data is continuously supplied to the encoder.

<Timing Control in Camera Processing Circuit>

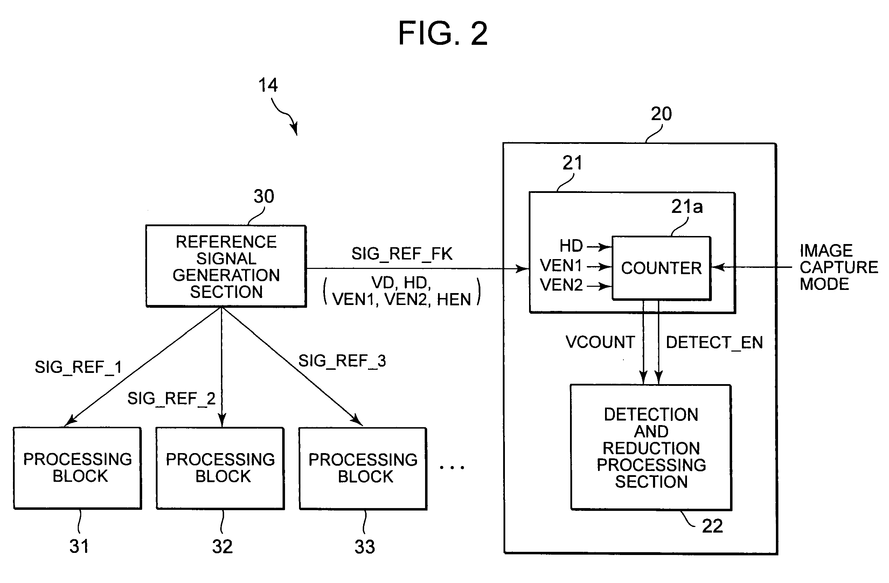

Fig. 2 is a block diagram showing the internal construction of the camera processing circuit 14.

As shown in Fig. 2, the camera processing circuit 14 includes a reference signal generation section 30 for generating reference signals for the entire circuit camera processing circuit 14, and a plurality of processing blocks 31 to 33 operative to perform various kinds of camera signal processing in response to reference signals supplied from the reference signal generation section 30. The camera processing circuit 14 is provided with the flicker reduction section 20 as one of such processing blocks.

The reference signal generation section 30 generates and outputs reference signals SIG_REF_1, SIG_REF_2 and SIG_REF_3 for causing the respective processing blocks 31 to 33 to operate, in synchronism with a reference signal supplied to the camera processing circuit 14 from an original oscillator. The reference signal generation section 30 outputs the reference signals SIG_REF_1, SIG_REF_2 and SIG_REF_3 while taking account of a delay occurring between each of the processing blocks 31 to 33 according to the flow of an image signal or the like. The respective processing blocks 31 to 33 are provided with blocks which respectively generate reference signals for minutely coordinating operation timing inside the processing blocks 31 to 33, on the basis of the reference signals SIG_REF_1, SIG_REF_2 and SIG_REF_3.

Similarly, the flicker reduction section 20 includes an internal reference signal generation section 21 which generates a reference signal for coordinating operation timing inside the flicker reduction section 20, on the basis of a reference signal SIG_REF_FK, and a detection and reduction processing section 22 which operates by using the generated reference signal. The detection and reduction processing section 22 corresponds to the correction means in the claims.

The reference signal generation section 30 outputs as the reference signal SIG_REF_FK a vertical synchronizing signal VD, a horizontal synchronizing signal HD, two kinds of enable signals VEN1 and VEN2 (which will be described later) indicative of the effective periodof an image signal relative to the vertical direction, an enable signal HEN indicative of the effective period of the image signal relative to the horizontal direction, and the like. The internal reference signal generation section 21 generates various kinds of reference signals, count values and the like for the detection and reduction processing section 22 on the basis of these signals. The internal reference signal generation section 21 corresponds to the reference signal output means in the claims.

For example, the internal reference signal generation section 21 is provided with a counter 21a which outputs a count value VCOUNT indicative of the number of lines during an effective period of one vertical period. The counter 21a receives the setting of an image capture mode corresponding to a picture rate from the system controller 15, and selects either of the enable signals VEN1 or VEN2 according to the setting. Then, the counter 21a outputs as the count value VCOUNT the count value of the horizontal synchronizing signal HD during the period for which the selected enable signal is held at its H level, and resets the count value when the enable signal goes to its L level.

In all sections inside the detection and reduction processing section 22, their operation timings relative to the vertical direction of the image signal are controlled on the basis of the count value VCOUNT. The internal reference signal generation section 21 can control the operation timing of the detection and reduction processing section 22 by comparing the count value VCOUNT with, for example, a predetermined value and freely generating signals such as an enable signal which is held at its H level for only a certain period and a pulse signal which goes to its H level at predetermined intervals during a certain period.

In the embodiment, the internal reference signal generation section 21 calculates a count (T_fk (which will be described later)) corresponding to one cycle of flicker stripes, according to the image capture mode which has been set, and generates an enable signal DETECT_EN which is held at its H level for the period during which the enable signal VEN1 or VEN2 is at the H level and the count value VCOUNT reaches the count value (T_fk), and supplies the enable signal DETECT_EN to the detection and reduction processing section 22. The enable signal DETECT_EN indicates the sampling period of the image signal in the detection and reduction processing section 22, and a detection-related block in the detection and reduction processing section 22 operates on the basis of the sampling period. In addition, the count (T_fk) which determines the H-level period of the enable signal DETECT_EN may also be set by the system controller 15.

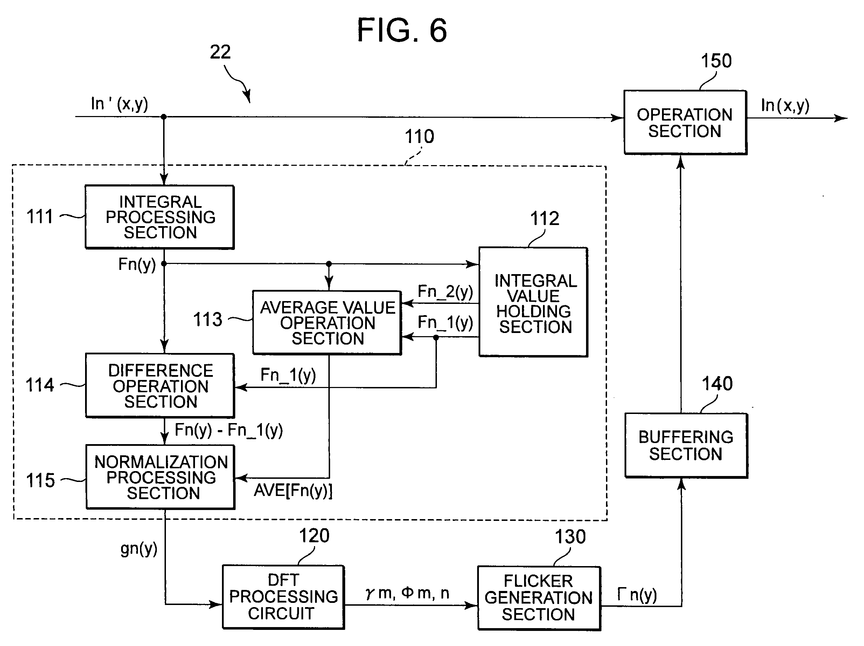

The detection and reduction processing section 22 execute the processing of detecting a flicker component from the input image signal and eliminating the flicker component from the image signal. The detection and reduction processing section 22 samples the image signal when the enable signal DETECT_EN is at the H level, estimates a flicker waveform from the sampled data, adjust the gain of the image signal, and reduces the flicker component. This sequence of processing is executed on the basis of various reference signals supplied from the internal reference signal generation section 21, such as the enable signal DETECT_EN and the count value VCOUNT. The detailed construction and operation of the detection and reduction processing section 22 will be described later with reference to Fig. 6.

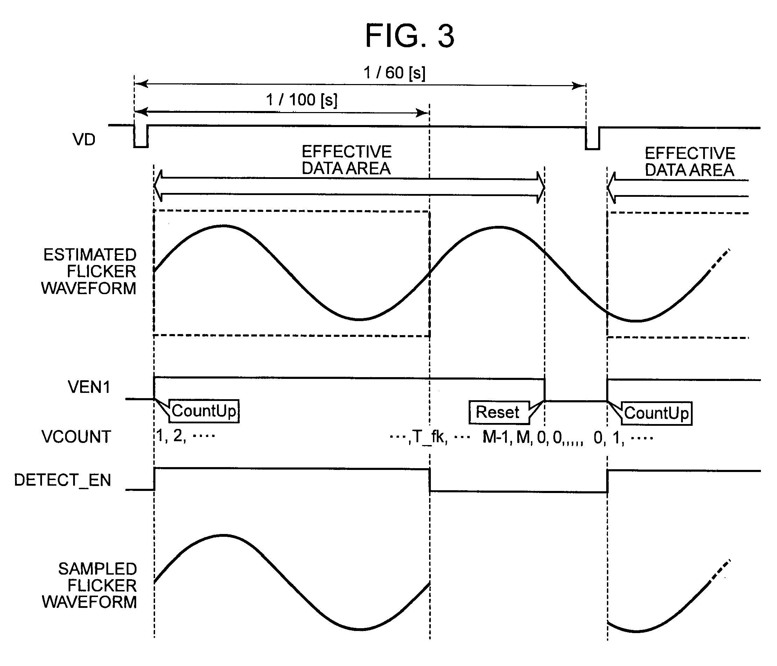

The operation of sampling an image signal in the detection and reduction processing section 22 on the basis of the various reference signals will be described below in more detail. In the following description, reference will be made to an example in which image capture is performed by an interlaced method under illumination of a fluorescent lamp using a commercial AC power source of a frequency of 50 Hz. In each of Figs. 3 to 5, a variation in brightness in the picture due to flicker estimated by the detection and reduction processing section 22 and that due to flicker sampled by the same are diagrammatically shown as flicker waveforms, respectively.

Fig. 3 is a timing chart aiding in explaining sampling operation performed in the normal image capture mode.

In Fig. 3, the enable signal VEN1 is a signal indicative of an effective data area of an image signal relative to the vertical direction in one field, and is varied according to a set picture rate. The count value VCOUNT is counted up to the number of lines M for one field during the period for which the enable signal VEN1 is held at the H level.

One cycle of flicker stripes is 1/100 [s] , and is shorter than the length of the effective data area during the normal image capture mode of 60 fps, as shown in Fig. 3. Accordingly, the detection and reduction processing section 22 can sample the image signal containing a flicker component for one cycle by field basis.

The enable signal DETECT_EN is set to the H level at the time of start of the effective data area, and goes to its L level when the count value VCOUNT reaches T_fk indicative of the number of lines corresponding to the end timing of one cycle of flicker stripes. The detection and reduction processing section 22 samples the image signal during the period for which the enable signal DETECT_EN is at the H level. Specifically, as will be described later, the detection and reduction processing section 22 integrates the image signal on a line by line basis during the H-level period of the enable signal DETECT_EN. Then, the detection and reduction processing section 22 calculates on the basis of the integral value the frequency spectrum of a flicker component whose fundamental wave is one cycle of flicker, thereby estimating a flicker waveform for one cycle.

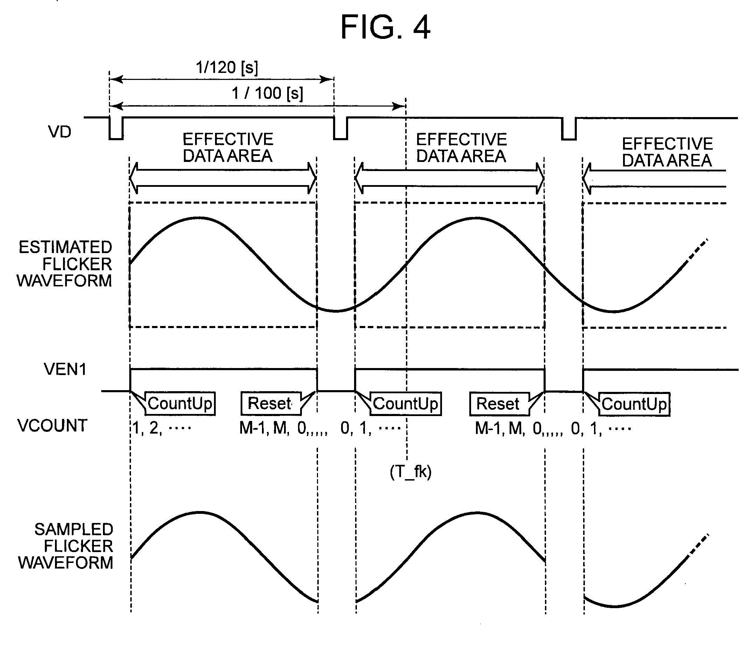

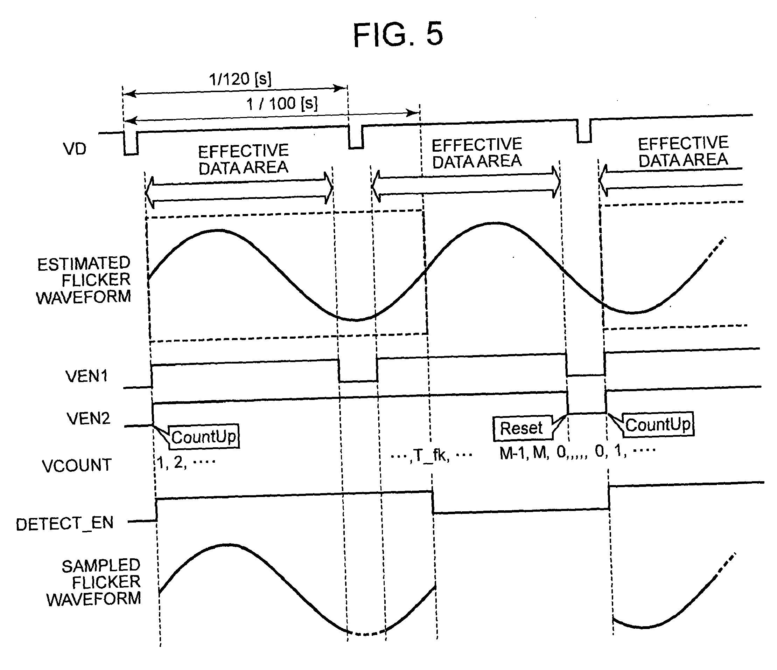

Sampling operation performed during image capture in the high-speed image capture mode, for example, at 120 fps will be described below with reference to Figs. 4 and 5.

Fig. 4 is a first timing chart aiding in explaining the sampling operation performed in the high-speed image capture mode.

In the example shown in Fig. 4, since the picture rate is made higher, the length of the effective data area shown by the enable signal VEN1 becomes shorter. It is assumed here that the counter 21a of the internal reference signal generation section 21 selects the enable signal VEN1 and counts the horizontal synchronizing signal HD within the period for which the enable signal VEN1 is at the H level. In this case, each time the period of the effective data area is repeated, the count value VCOUNT is counted up to the number of lines M as in the case of the normal image capture mode.

However, in the example shown in Fig. 4, if the relationship of FPS > 2 x f is satisfied, where f represents the power source frequency of the fluorescent lamp and FPS represents the picture rate, the period of the effective data area of one field is shorter than one cycle of flicker. Accordingly, the count value VCOUNT is reset before it is counted to the T_fk corresponding to one cycle of flicker, so that sampling timing for one cycle of flicker may not be generated. Namely, the detection-related block of the detection and reduction processing section 22 may not process the image signal each cycle of flicker.

Fig. 5 is a second timing chart aiding in explaining sampling operation performed in the high-speed image capture mode.

To address the issue mentioned with reference to Fig. 4, in the present embodiment, the enable signal VEN1 indicative of the effective data area corresponding to the picture rate and the enable signal VEN2 indicative of an effective data area during the normal image capture mode of 60 fps are supplied from the reference signal generation section 30 to the flicker reduction section 20. The counter 21a of the internal reference signal generation section 21 is adapted to select the input enable signal VEN2 when the high-speed image capture mode is set during which FPS > 2 x f is satisfied is set, count the horizontal synchronizing signal HD during the period for which the enable signal VEN2 is at the H level, and output the count value VCOUNT.

The enable signal VEN2 may be a signal which is consistently generated on the basis of the synchronizing signal during the normal image capture mode and exactly indicates the effective data area during the normal image capture mode, but it may also be a signal which is generated on the basis of the enable signal VEN1 as in the example shown in Fig. 5, for example, by counting synchronizing timing. Namely, the enable signal VEN2 may be generated as a signal which is held at its H level for a period not less than one cycle of flicker from the time of start of the effective data area of a certain field. In addition, the counter 21a of the internal reference signal generation section 21 may also be constructed not to select an enable signal but to consistently generate the count value VCOUNT on the basis of the enable signal VEN2.

When the enable signal VEN2 is used, the upper limit of the count value VCOUNT becomes not less than T_fk corresponding to one cycle of flicker. The enable signal DETECT_EN is held at the H level until the count value VCOUNT reaches T_fk after the count value VCOUNT starts to be counted up. Accordingly, in the detection and reduction processing section 22, by using the enable signal DETECT_EN, it is possible to cause the detection-related block to consistently acquire and process each image signal containing a flicker component for one cycle or more.

However, since an ineffective period of image data (vertical blanking period) exists during the period for which the enable signal DETECT_EN is at the H level, sampled values of the image signal are indefinite during this period. For this reason, in the present embodiment, as will be described later, at the final stage of a sampling (integral) processing block, an image signal in the ineffective period is interpolated from the previous and subsequent signals so that flicker components for one cycle are smoothly joined.

<Flicker Reduction Process>

Fig. 6 is a block diagram showing the internal construction of the detection and reduction processing section 22.

The detection and reduction processing section 22 includes a normalized integral value calculation section 110 for detecting an image signal, normalizing a detected value and outputting a normalized detected value, a DFT processing section 120 for performing DFT processing on the normalized detected value, a flicker generation section 130 for estimating a flicker component from the result of spectrum analysis by DFT, a buffering section 140 for temporarily storing the estimated value of the flicker component, and an operation section 150 for eliminating the estimated flicker component from the image signal. The buffering section 140 corresponds to the buffer means in the claims. The normalized integral value calculation section 110 includes an integral processing section 111, an integral value holding section 112, an average value operation section 113, a difference operation section 114, and a normalization processing section 115.

The integral processing section 111 integrates an input image signal on a line by line basis over the period for which the enable signal DETECT_EN is at the H level (hereinafter referred to as the sampling period). The integral processing section 111 corresponds to the integration means or the integrator in the claims. The integral value holding section 112 temporarily holds integral values during two sampling periods. The average value operation section 113 averages integral values calculated over the last three sampling periods. The difference operation section 114 calculates the difference value between integral values calculated over the last two sampling periods. The normalization processing section 115 normalizes the calculated difference value.

The DFT processing section 120 performs frequency analysis on the normalized difference value by DFT and estimates the amplitude and the initial phase of a flicker component. The flicker generation section 130 calculates a correction coefficient indicative of the proportion of a flicker component contained in the image signal, from an estimated value obtained by frequency analysis. The flicker generation section 130 corresponds to the flicker detection means or the flicker detector in the claims. The operation section 150 performs an operation for eliminating the flicker component from the image signal, on the basis of the calculated correction coefficient.

Part of the processing performed by the above-mentioned blocks may also be executed by software processing in the system controller 15. In the image capture apparatus according to the present embodiment, the processing of the blocks shown in Fig. 6 is executed on each of a luminance signal and color-difference signals which constitute the image signal. Alternatively, the processing may be executed on at least a luminance signal, and may also be executed on each of color-difference signals and color signals as occasion demands. In addition, as to the luminance signal, the processing may also be executed at the stage of the color signals which are not yet synthesized with the luminance signal. In addition, the processing at the stage of the color signals may also be executed at either the stage of primary color signals or the stage of complementary color signals. In the case where the processing is executed on these color signals, the processing performed by the blocks shown in Fig. 6 is executed on each of the color signals.

The processing of detection and reduction of flicker will be described below with reference to Fig. 6.

In general, a flicker component is proportional to the signal strength of a subject. Accordingly, if In'(x, y) represents an input image signal obtained from a general subject at an arbitrary pixel (x, y) during an arbitrary sampling period n (RGB primary color signals or a luminance signal before flicker reduction), In' (x, y) is expressed by the sum of a signal component containing no flicker component and a flicker component proportional to the signal component by the following formula (3):

$$\mathrm{In}(x, y) = [1 + \Gamma n(y)] \times \mathrm{In}(x, y), \qquad \cdots \ (3)$$

where In' (x, y) represents the signal component, $\Gamma n(y) \times \mathrm{In}(x, y)$ represents the flicker component, and $\Gamma n(y)$ represents a flicker coefficient. The reason why the flicker coefficient is represented by $\Gamma n(y)$ is that one horizontal cycle is sufficiently short compared to the emission cycle (1/100 seconds) of a fluorescent lamp and the flicker coefficient can be regarded as being constant on one line of one field.

To generalize $\Gamma n(y)$, formula (3) is described in a form developed into Fourier series, as shown by the following formula (4):

$$\Gamma n(y) = \sum_{m=1}^{\infty} \gamma m \times \cos\left[ m \times \frac{2\pi}{\lambda 0} \times y + \Phi m, n \right]$$

$$= \sum_{m=1}^{\infty} \gamma m \times \cos\left( m \times \omega 0 \times y + \Phi m, n \right) \qquad \cdots\cdots \ (4)$$

In formula (4), $\lambda 0$ represents the wavelength of a flicker waveform and corresponds to L (= M x FPS/100) lines, where M represents the number of read lines per field, and $\omega 0$ represents a standardized angular frequency normalized by $\lambda 0$.

In formula (4), $\gamma m$ represents the amplitude of a flicker component of each degree (m = 1, 2, 3, $\cdots$), and $\Phi m$, n represents the initial phase of the flicker component of each degree and is determined by the emission cycle (1/100 seconds) of the fluorescent lamp and exposure timing. However, when the same flicker waveform is cyclically repeated at intervals of three successive sampling periods as in the case where, for example, the power source frequency of the fluorescent lamp is 50 Hz and the picture rate is 60 fps or 120 fps, Φm, n takes on the same value at intervals of three sampling periods, so that the difference in Φm, n between the present and previous sampling periods is expressed by the following formula (5):

$$\Delta \Phi m, n = -\frac{2\pi}{3} \times m \qquad \cdots\cdots (5)$$

In the detection and reduction processing section 22 shown in Fig. 6, first of all, in order to reduce the influence of pictorial patterns on flicker detection, the integral processing section 111 integrates the input image signal In' (x, y) in the horizontal direction of the picture on a line by line basis as expressed by the following formula (6), thereby calculating an integral value Fn(y). In formula (6), αn(y) is an integral value of a signal component In(x, y) for one line, as expressed by the following formula (7).

$$\Gamma n(y) = \sum_{x} In'(x, y) = \sum_{x} \left( [1 + \Gamma n(y)] \times In(x, y) \right)$$
$$= \sum_{x} \Gamma n(y) + \Gamma n(y) \sum_{x} In(x, y)$$
$$= \alpha_n(y) + \alpha_n(y) \times \Gamma n(y) \qquad \cdots\cdots (6)$$

wherein

$$\alpha_n(y) = \sum_{x} In(x, y) \qquad \cdots\cdots (7)$$

The integral processing section 111 outputs an integral value on a line by line basis during the sampling period for which the enable signal DETECT_EN is at the H level. However, during the high-speed image capture mode where FPS > 2 x f is satisfied, since a vertical blanking period is contained in the sampling period, the integral processing section 111 interpolates an output value during the vertical blanking period. For example, the integral processing section 111 interpolates an output value from the previous and subsequent integral results and output the interpolated output value.

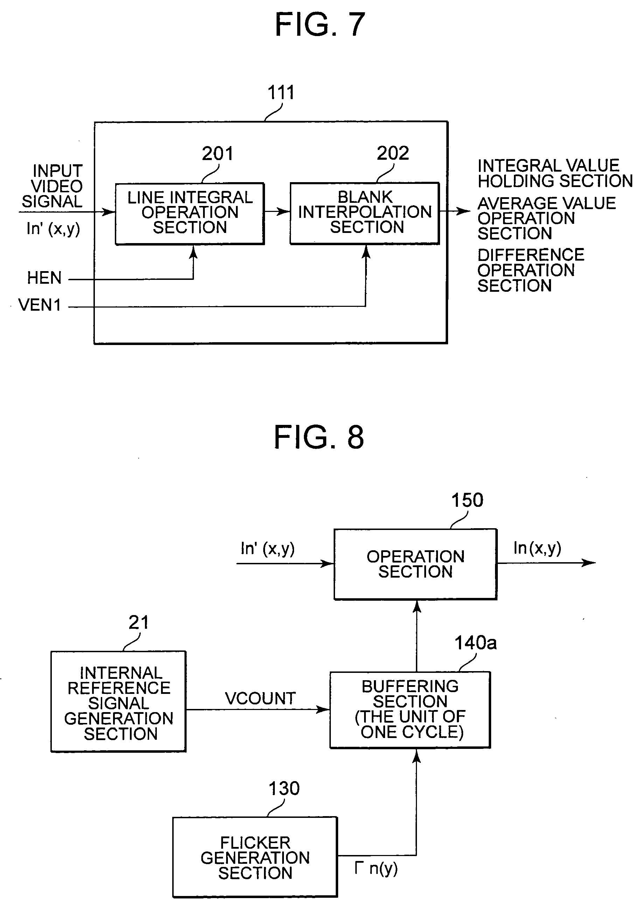

Fig. 7 is a block diagram showing the internal construction of the integral processing section 111 according to a first embodiment of the present invention.

As shown in Fig. 7, the integral processing section 111 includes a line integral operation section 201 for executing the above-mentioned line-by-line integration on the basis of the enable signal HEN, and a blank interpolation section 202 for interpolating an integral value during a vertical blanking period. The blank interpolation section 202 detects an ineffective period of an image signal on the basis of the enable signal VEN1, and during the ineffective period, the blank interpolation section 202 performs linear interpolation by using values which are outputted from the line integral operation section 201 before and after the ineffective period, so as to smoothly join the integral results outputted before and after the ineffective period.

This interpolation processing is a primary factor causing distortion of the original flicker waveform. However, the distortion hardly influences lower-degree spectra outputted from the DFT processing section 120 at the subsequent stage, but has an influence on only higher-degree spectra. In the flicker detection processing according to the first embodiment, as will be described later, lower-degree terms need only to be used in DFT operation, so that sufficient flicker detection accuracy can be obtained even with a simple interpolation method such as linear interpolation.

The following description refers back to Fig. 6.

The integral value Fn(y) outputted from the integral processing section 111 is temporarily stored in the integral value holding section 112 for the purpose of flicker detection during subsequent sampling periods. The integral value holding section 112 is constructed to be able to hold integral values for at least two sampling periods.

Incidentally, if a subj ect is uniform, the integral value $\alpha n(y)$ of the signal component $In(x, y)$ is constant, so that it is easy to extract a flicker component $\alpha n(y) \times \Gamma n(y)$ from the integral value Fn (y) of the input image signal In' (x, y) . However, in the case of a general subject, since a m x $\omega 0$ component is contained in $\alpha n(y)$, it is impossible to separate a luminance component and a color component contained in a flicker component from a luminance component and a color component contained in the signal components of the subject itself, so that it is impossible to purely extract only the flicker component. Furthermore, since the flicker component of the second term of formula (6) is extremely small compared to the signal component of the first term of formula (6), the flicker component is nearly buried in the signal component.

Accordingly, the detection and reduction processing section 22 uses integral values for three successive sampling periods to eliminate the influence of $\alpha n$ (y) from the integral value Fn(y). Specifically, in the first embodiment, during the calculation of the integral value Fn (y) , an integral value Fn_1(y) along the same line (which herein means a line along which the count value VCOUNT takes on the same value) during the last sampling period and an integral value Fn_2(y) along the same line during the second last sampling period are read from the integral value holding section 112, and an average AVE [Fn(y)] of the three integral values Fn(y), Fn_1(y) and Fn 2(y) is calculated in the average value operation section 113.

In this operation, if a subject can be regarded as being nearly the same during the three successive sampling periods, $\alpha n(y)$ can be regarded as the same value. If the movement of the subject is sufficiently small over the three sampling periods, this assumption present no problem in practical terms. Furthermore, from the relationshipof formula (5) , tocalculate the average value of the integral values for the three successive sampling periods is to add together signals respectively having flicker components sequentially deviated by (-2π/3) x m in phase from one to another, with the result that the flicker components are cancelled. Accordingly, the average AVE [Fn(y)] is expressed by the following formula (8) :

$$\Gamma n(y) = \sum_X In'(x, y) = \sum_X \left( [1 + \Gamma n(y)] \times In(x, y) \right)$$

$$= \sum_X \Gamma n(y) + \Gamma n(y) \sum_X In(x, y)$$

$$= \alpha_n(y) + \alpha_n(y) \times \Gamma n(y) \qquad \cdots\cdots (6)$$

WHEREIN

$$\alpha_n(y) = \sum_X In(x, y) \qquad \cdots\cdots (7)$$

The above description has referred to the case where an average value of integral values for three successive sampling periods is calculated on the assumption that the approximation of formula (9) is satisfied, but if the movement of the subject is large, the approximation of formula (9) may not be satisfied. However, in such a case, if the number of successive sampling periods associated with the processing of averaging is set to a multiple of 3, the influence of the movement can be reduced by a low-pass filter action in the time-axis direction.

The detection and reduction processing section 22 shown in Fig. 6 assumes that the approximation of formula (9) is satisfied. In the first embodiment, the difference operation section 114 calculates the difference between the integral value Fn(y) for the present sampling period, supplied from the integral processing section 111, and the integral value Fn_1(y) for the previous sampling period, supplied from the integral value holding section 112, thereby calculating a difference value Fn(y) - Fn_1(y) expressed by the following formula (10). In addition, formula (10) also assumes that the approximation of formula (9) is satisfied.

$$Fn(y) - Fn\_1(y)$$

$$= \{\alpha_n(y) + \alpha_n(y) \times \Gamma n(y)\} - \{\alpha_{n\_1}(y) + \alpha_{n\_1}(y) \times \Gamma n\_1(y)\}$$

$$= \alpha_n(y) \times \{\Gamma n(y) - \Gamma n\_1(y)\}$$

$$= \alpha_n(y) \sum_{m=1}^{\infty} \gamma m \times \{\cos(m \times \omega 0 \times y + \Phi m, n) - \cos(m \times \omega 0 \times y + \Phi m, n\_1)\}$$

$$\cdots\cdots (10)$$

Furthermore, in the detection and reduction processing section 22 shown in Fig. 6, the normalization processing section 115 normalizes the difference value Fn (y) - Fn_1(y) outputted from the difference operation section 114, by dividing the difference value Fn (y) - Fn_1(y) by the average AVE [Fn (y) ] outputted from the average value operation section 113.

A difference value gn(y) after normalization is developed as expressed by the following formula (11), by the above-mentioned formulae (8) and (10) and a product-to-sum formula of a trigonometric function, and is expressed by the following formula (12) from the relationship of formula (5). In addition, |Am| and θm in formula (12) are respectively expressed by the following formulae (13) and (14).

$$gn(y) = \frac{Fn(y) - Fn\_1(y)}{AVE[Fn(y)]}$$

$$= \sum_{m=1}^{\infty} \gamma m \times \{\cos(m \times \omega 0 \times y + \Phi m, n) - \cos(m \times \omega 0 \times y + \Phi m, n\_1)\}$$

$$= \sum_{m=1}^{\infty} (-2)\gamma m \times \left\{ \sin\left(m \times \omega 0 \times y + \frac{\Phi m, n + \Phi m, n\_1}{2}\right) \times \sin\left(\frac{\Phi m, n - \Phi m, n\_1}{2}\right)\right\}$$

$$\cdots\cdots (11)$$

$$gn(y) = \sum_{m=1}^{\infty} (-2)\gamma m \times \sin\left(m \times \omega 0 \times y + \Phi m, n + m \times \frac{\pi}{3}\right) \times \sin\left(-m \times \frac{\pi}{3}\right)$$

$$= \sum_{m=1}^{\infty} 2 \times \gamma m \times \cos\left(m \times \omega 0 \times y + \Phi m, n + m \times \frac{\pi}{3} - \frac{\pi}{2}\right) \times \sin\left(m \times \frac{\pi}{3}\right)$$

$$= \sum_{m=1}^{\infty} 2 \times \gamma m \times \sin\left(m \times \frac{\pi}{3}\right) \times \cos\left(m \times \omega 0 \times y + \Phi m, n + m \times \frac{\pi}{3} - \frac{\pi}{2}\right)$$

$$= \sum_{m=1}^{\infty} |Am| \times \cos(m \times \omega 0 \times y + \theta m) \qquad\qquad \cdots\cdots (12)$$

wherein

$$|Am| = 2 \times \gamma m \times \sin\left(m \times \frac{\pi}{3}\right) \qquad\qquad \cdots\cdots (13)$$

$$\theta m = \Phi m, n + m \times \frac{\pi}{3} - \frac{\pi}{2} \qquad \cdots\cdots (14)$$

Incidentally, since the influence of the signal strength of the subject remains in the difference value Fn (y) - Fn_1 (y) , the levels of a luminance variation and a color variation due to flicker tend to differ in different areas. However, by normalizing the difference value Fn(y) - Fn_1(y) in the above-mentioned manner, it is possible to adjust the luminance variation and the color variation due to flicker to the same level over all areas.

|Am| and θm expressed by formulae (13) and (14) are the amplitude and the initial phase of a spectrum of each degree of the difference value gn(y) after normalization, respectively. If the difference value gn(y) after normalization is Fourier-transformed to detect the amplitude |Am| and the initial phase θm of the spectrum of each degree, the amplitude |Am| and the initial phase Φm, n of the flicker component of each degree, shown in the above-mentioned formula (4), can be found by the following formulae (15) and (16):

$$\gamma m = \frac{|Am|}{2 \times \sin\left(m \times \frac{\pi}{3}\right)} \qquad \cdots\cdots (15)$$

$$\Phi m, n = \theta m - m \times \frac{\pi}{3} + \frac{\pi}{2} \qquad \cdots\cdots (16)$$

Therefore, in the detection and reduction processing section 22 shown in Fig. 6, the DFT processing section 120 performs discrete Fourier transform on data corresponding to one wavelength of flicker (for L lines) in the difference value gn(y) after normalization, outputted from the normalization processing section 115.

If DFT[gn(y)] represents the DFT operation and Gn(m) represents the DFT result of degree m, the DFT operation is expressed by the following formula (17). However, W in formula (17) is expressed by formula (18). Accordingly, by setting the data length of the DFT operation to one wavelength of flicker (for L lines), it is possible to directly find a discrete spectrum of an integral multiple of the standardized angular frequency ω0, so that it is possible to simplify operation processing. In addition, the data length of the DFT operation is given by a sampling period based on the enable signal DETECT_EN.

$$DFT\left[gn(y)\right] = Gn(m) = \sum_{i=0}^{L-1} gn(i) \times W^{m \times i} \qquad \cdots\cdots (17)$$

wherein

$$W = \exp\left[-j \times \frac{2\pi}{L}\right] \qquad \cdots\cdots (18)$$

In addition, on the basis of a definition of DFT, the relationship between formulae (13) and formula (17) and the relationship between formulae (14) and formula (17) are respectively expressed by the following formulae (19) and (20) :

$$\left|Am\right| = 2 \times \frac{\left|Gn(m)\right|}{L} \qquad \cdots\cdots (1\,9)$$

$$\theta m = \tan^{-1}\!\left(\frac{\mathrm{Im}\bigl(Gn(m)\bigr)}{\mathrm{Re}\bigl(Gn(m)\bigr)}\right) \qquad \cdots\cdots (2\,0)$$

wherein

Im ($Gn$ ($m$)) :IMAGINARY PART
Re($Gn$($m$)) :REAL PART

Accordingly, the amplitude γm and the initial phase Φm, n of the flicker component of each degree can be found from formulae (15), (16), (19) and (20) and the following formulae (21) and (22):
$$\gamma m = \frac{\left|Gn(m)\right|}{L \times \sin\!\left(m \times \dfrac{\pi}{3}\right)} \qquad \cdots\cdots (2\,1)$$

$$\Phi m, n = \tan^{-1}\!\left(\frac{\mathrm{Im}\bigl(Gn(m)\bigr)}{\mathrm{Re}\bigl(Gn(m)\bigr)}\right) - m \times \frac{\pi}{3} + \frac{\pi}{2} \qquad \cdots\cdots (2\,2)$$

The DFT processing section 120 first extracts a spectrum by means of the DFT operation defined by formula (17), and then estimates the amplitude γm and the initial phase Φm, n of the flicker component of each degree by means of the operations of formulae (21) and (22).
In general, Fourier transforms used in digital signal processing are fast Fourier transforms (FFTs). However, since the data length in FFTs needs to be the power of 2, in the first embodiment, frequency analysis is performed by DFT so as to simplify data processing. Under illumination of an actual fluorescent lamp, since flicker components can be satisfactorily approximated even if the degree m is restricted to a low degree, all data need not be outputted in the DFT operation. Accordingly, DFTs are not disadvantageous in terms of operation efficiency, as compared with FFTs.
The flicker generation section 130 executes the operation processing of the above-mentioned formula (4) by using the amplitude γm and the initial phase Φm, n estimated by the DFT processing section 120, thereby calculating the flicker coefficient Γn(y) which correctly reflects a flicker component. In addition, with the operation processing of formula (4), it is possible to satisfactorily approximate a flicker component in practical terms under illumination of an actual fluorescent lamp, even if the degree of a total sum is restricted not to infinity but to a predetermined degree, for example, the second degree so as to omit high-degree processing.
The above-mentioned formula (3) can be modified as expressed by the following formula (23). On the basis of formula (23) , the operation section 150 adds "1" to the flicker coefficient Γn(y) supplied from the flicker generation section 130 and divides the image signal by the added value, thereby suppressing the flicker component.

$$In(x,\ y)\ =\ In'(x,\ y)/[1\ +\ \Gamma n(y)] \qquad \cdots\ (23)$$

In addition, in the above-mentioned processing, the detection-related block for integration, frequency analysis and the like of the image signal is made to operate on the basis of one cycle of the flicker component based on the enable signal DETECT_EN, so that a correction-related block (he operation section 150) based on the estimation result of flicker is also made to operate not by field basis but on the basis of one cycle of the flicker component, because sequences of operations can be easily synchronized.

For example, in the case where the flicker coefficient $\Gamma n(y)$ from the flicker generation section 130 is held in a buffer by one field, if one cycle of the flicker component is accommodated in one vertical synchronization period, synchronization of the detection-related block and the correction-related block can be performed by sequentially reading the flicker coefficient $\Gamma n(y)$ from the buffer to the operation section 150 according to the number of lines in one field. However, if the same method is adopted in the high-speed image capture mode in which one cycle of the flicker component is longer than one vertical synchronization period, the phase of the flicker component will deviate field by field and become unable to be appropriately corrected.

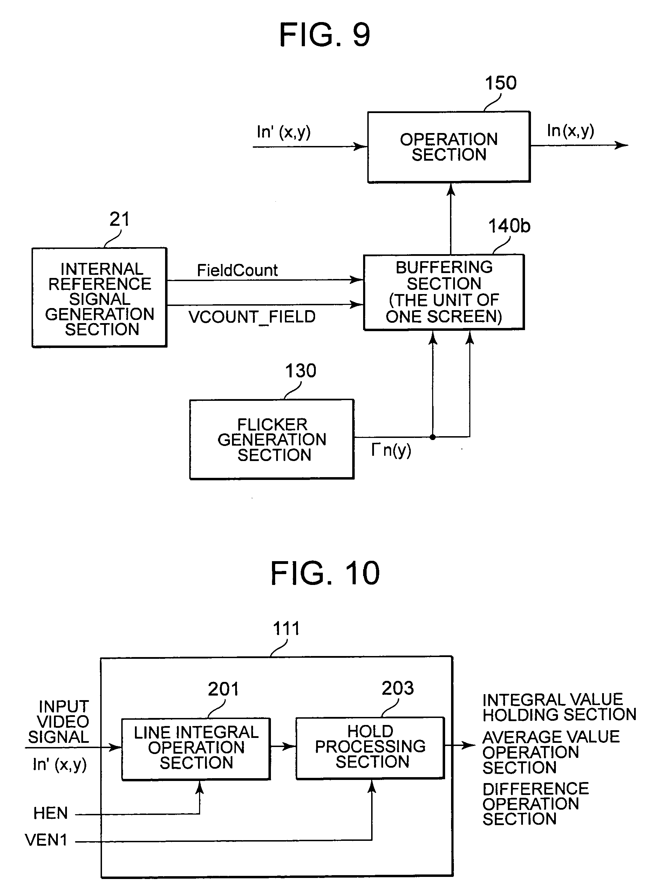

For this reason, in the first embodiment, the flicker coefficient $\Gamma n(y)$ is temporarily accumulated in the buffering section 140 provided at the input stage of the operation section 150, so that synchronization control and the like of the unit of data to be buffered and writing/reading of data can be optimized to enable synchronization control taking account of one cycle of the flicker component. Examples of control of data output to the operation section 150 by the use of the buffering section 140 will be described below with reference to Figs. 8 and 9.

Fig. 8 is a block diagram showing a first example of the construction of a buffering section.

A buffering section 140a shown in Fig. 8 temporarily holds the flicker coefficient $\Gamma n(y)$ supplied from the flicker generation section 130, in units of one cycle of the flicker component. When the buffering section 140a is supplied with a count value VCOUNT from the internal reference signal generation section 21 of the flicker reduction section 20, the buffering section 140a supplies the flicker coefficient $\Gamma n(y)$ corresponding to the number of lines based on the count value VCOUNT, from a buffer area of one cycle unit to the operation section 150. Namely, since output processing of the flicker coefficient $\Gamma n(y)$ is controlled on the basis of not the number of lines per picture but the number of lines per one cycle of the flicker component based on the enable signal VEN2, the operation section 150 can applies an appropriate correction gain to the image signal.

Alternatively, the construction shown in Fig. 9 may also be used to control the output of the flicker coefficient $\Gamma n(y)$ in a picture by picture basis. Fig. 9 is a block diagram showing a second example of the construction of a buffering section.

A buffering section 140b shown in Fig. 9 temporarily holds the flicker coefficient $\Gamma n(y)$ supplied from the flicker generation section 130, on a picture by picture basis (in this example, by field basis). For example, the buffering section 140b has a plurality of buffer areas capable of accommodating the flicker coefficient $\Gamma n(y)$ corresponding to one field.

In addition, the internal reference signal generation section 21 supplies to the buffering section 140b a count value FieldCount indicative of the number of pictures and a count value VCOUNT_FIELD indicative of the number of lines per picture (in this example, per field). In the internal reference signal generation section 21, the count value FieldCount is counted up at the rise of the enable signal VEN1 according to a picture rate, and is reset at the rise of the enable signal VEN2 corresponding to the normal image capture mode. The count value VCOUNT_FIELD counts the horizontal synchronizing signal HD during the period for which the enable signal VEN1 is held at the H level after having risen to the H level.

The flicker generation section 130 sequentially supplies the flicker coefficient $\Gamma n(y)$ adjusted in phase for each field to the corresponding one of the buffer areas of the buffering section 140b. For example, if the flicker coefficient $\Gamma n(y)$ for one cycle spreads over a plurality of fields, the phase of the flicker coefficient $\Gamma n(y)$ is adjusted so that the flicker coefficient $\Gamma n(y)$ takes on a value obtainable at the end of a vertical blanking period, at the head of a buffer area corresponding to the field next to the fields over which the flicker coefficient $\Gamma n(y)$ spreads.

The buffering section 140b sequentially selects one of the field-unit buffer areas according to the count value FieldCount, and reads the flicker coefficient $\Gamma n(y)$ corresponding to the number of lines based on the count value VCOUNT_FIELD, from the selected buffer area to the operation section 150. Accordingly, while reading is being performed by field basis, an appropriate correction gain is applied to the image signal in the operation section 150.

According to the above-mentioned flicker detection method, even in the case of an area containing a small quantity of flicker components, such as a black background section or a low-illuminance section, in which flicker components may not be prevented from being completely buried in signal components, by only the integral value Fn (y) , it is possible to detect the flicker components with high accuracy, by calculating the difference value Fn(y) - Fn_1(y) and normalizing the calculated difference value Fn (y) - Fn_1(y) with the average AVE [Fn(y)].

In addition, during the calculation of the flicker coefficient $\Gamma n(y)$, since the degree can be restricted to a low degree, flicker detection can be made accurate by comparatively simple processing. Incidentally, when a flicker component is estimated from spectra of up to a particular degree, the difference value gn(y) after normalization is approximated without being completely reproduced, but according to this method, even if a discontinuous section appears in the difference value gn(y) after normalization owing to the state of a subject, it is possible to accurately estimate a flicker component in the section.

In addition, since the enable signal VEN2 is used as a reference signal during operation and the unit of integration of an image signal and the unit of processing by DFT are each set to one cycle of a flicker waveform, the above-mentioned highly accurate flicker detection algorithm can be applied not only to the normal image capture mode but also to the high-speed image capture mode in which one cycle of a flicker component is longer than a vertical synchronization period. For example, if a simple processing function such as a circuit for generating the enable signal DETECT_EN and the count value VCOUNT is added to the processing circuit which realizes the flicker detection algorithm, the flicker detection algorithm can be applied to the high-speed image capture mode. Accordingly, highly accurate flicker detection can be realized at low cost irrespective of picture rates.

In addition, in the above-mentioned first embodiment, a finite calculation accuracy can be effectively ensured by normalizing the difference value Fn(y) - Fn_1(y) with the average AVE [Fn(y)]. However, if the required calculation accuracy can be satisfied, the integral value Fn(y) may be directly normalized with the average AVE [Fn(y)].

In addition, the integral value Fn(y) may also be normalized with the integral value Fn (y) instead of the average AVE [Fn(y)]. In this case, if a flicker waveform does not have repetition for each of a plurality of pictures owing to the relationship between the flicker waveform and a picture rate, it is possible to highly accurately detect flicker and reduce flicker components.

Furthermore, although the above description of the first embodiment has referred to the case in which the input image signal In' (x, y) is integrated for one line, this integration is intended to reduce the influence of pictorial patterns and obtain sampled values of a flicker component. Accordingly, the integration may also be performed over a period of one line or more. In addition, at this time, pixels to be sampled may also be omitted during the period for which the integration is being performed. In practice, it is desirable to obtain at least several to ten sampled values at one cycle of flicker in the picture, i.e., for L lines.

<Other Embodiments>

Image capture apparatuses according to a second and third embodiments of the present invention will be described below with reference to Figs. 10 to 13. The basic construction of each of the image capture apparatuses is the same as that of the image capture apparatus according to the first embodiment. However, the second and third embodiments differ from the first embodiment in only the construction of the integral processing section 111 provided in the detection and reduction processing section 22, so that the second and third embodiments differ from the first embodiment in a method of outputting an integral value during a vertical blanking period.

Fig. 10 is a block diagram showing the internal construction of the integral processing section 111 according to the second embodiment.

The integral processing section 111 according to the second embodiment includes the line integral operation section 201 having the same construction as shown in Fig. 7, and a hold processing section 203. The hold processing section 203 holds a value outputted from the line integral operation section 201 immediately before a vertical blanking period for which the enable signal VEN1 is at the L level, and continues to output the same value during the vertical blanking period until the next effective period is started. This construction makes it possible to simplify the circuit construction compared to the construction shown in Fig. 7, thereby reducing the circuit scale and the manufacturing cost of the image capture apparatus.

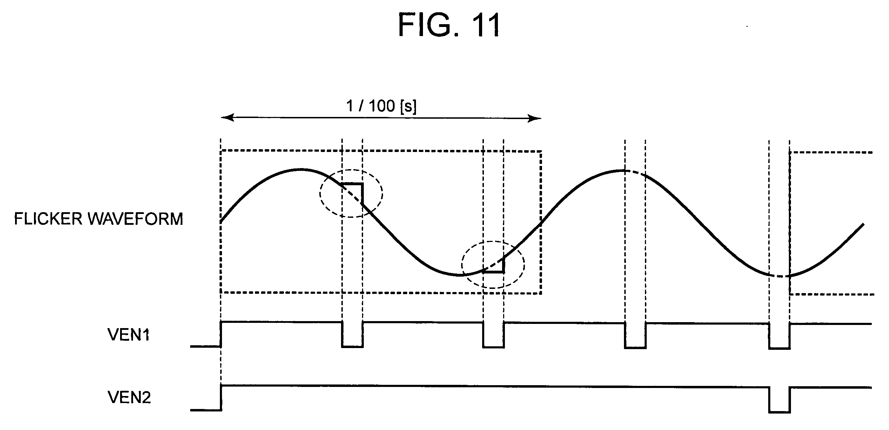

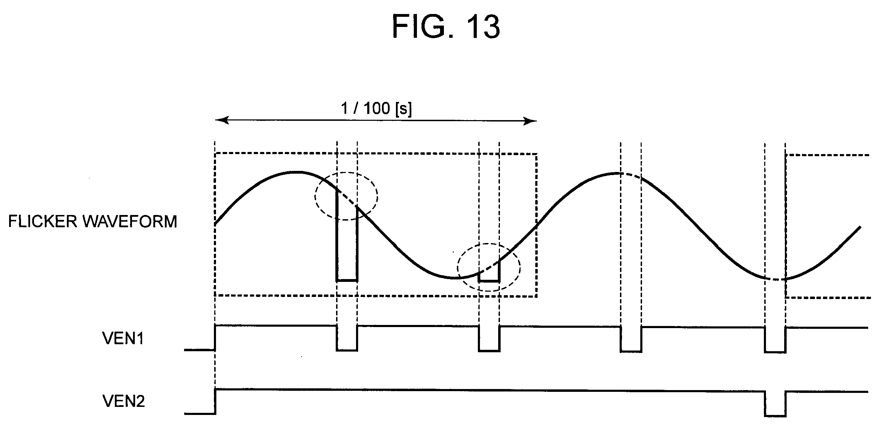

Fig. 11 is a graph showing an example of a flicker waveform estimated in the second embodiment. By way of example, Fig. 11 shows the case where the picture rate in the high-speed image capture mode is made four times as high as that in the normal image capture mode (Fig. 13 which will be mentioned later also shows a similar case).

In the integral processing section 111 according to the second embodiment, the degree of distortion of a flicker waveform is large like the flicker waveform shown in Fig. 11, as compared to the first embodiment. However, as the picture rate increases, the vertical blanking period becomes sufficiently short compared to the cycle of the flicker waveform, so that the influence of such distortion hardly appears in the low-degree output spectrum outputted from the DFT processing section 120 and merely appears on a high-degree side. In addition, in the above-mentioned flicker detection algorithm, low-order terms need only to be used in the DFT operation. Accordingly, the integral processing section 111 constructed according to the second embodiment also makes it possible to obtain practically sufficient flicker detection and correction accuracy.

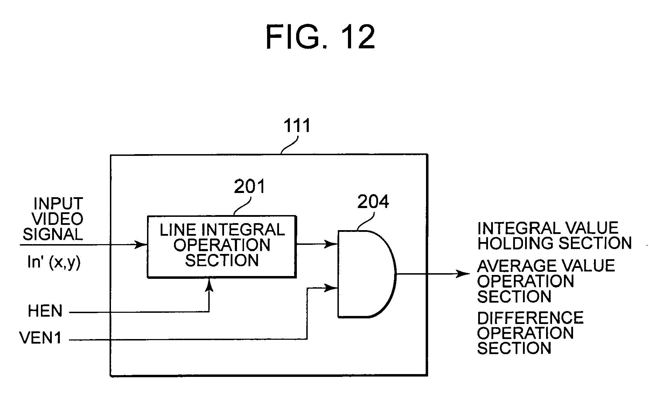

Fig. 12 is block diagram showing the internal construction of the integral processing section 111 according to the third embodiment.

The integral processing section 111 according to the third embodiment includes the line integral operation section 201 having the same construction as shown in Fig. 7, and an AND (logical product) section 204. The integral value outputted from the line integral operation section 201 is applied to one of the input terminals of the AND gate 204, while the enable signal VEN1 is applied to the other. Accordingly, during the vertical blanking period for which the enable signal VEN1 is at the L level, the integral value outputted from the AND gate 204 is fixed to "0". This construction makes it possible to simplify the circuit construction and reduce the circuit scale and the manufacturing cost of the image capture apparatus to a further extent, compared to the construction shown in Fig. 7.

Fig. 13 is a graph showing an example of a flicker waveform estimated in the third embodiment.

In the integral processing section 111 according to the third embodiment, the degree of distortion of a flicker waveform is large like the flicker waveform shown in Fig. 13, as compared to the second embodiment. However, for the same reason as mentioned in connection with the second embodiment, the integral processing section 111 according to the third embodiment makes it possible to obtain practically sufficient flicker detection and correction accuracy.

The above description of each of the embodiments has referred to the case where a CMOS sensor is used as an image capture device, but the present invention can also be applied to the case where another XY address type of image capture devices such as a MOS type image sensor other than the CMOS image sensor is used. In addition, the present invention can also be applied to various image capture apparatuses using XY address type of image capture devices and to equipment such as mobile telephones or PDAs (Personal Digital Assistants) equipped with such an image capture function.

Furthermore, the present invention can be applied to processing of an image signal captured by a small-sized camera for game software or a television telephone to be connected to, for example, a PC (personal computer), as well as to an image processing apparatus which performs processing for correcting a captured image.

In addition, the above-mentioned processing function can be realized by a computer. In this case, there is provided a programwhich describes the processing contents of a function to be incorporated in the apparatus. The processing function is realized on the computer by the program being executed by the computer. The program which describes the processing contents can be recorded on a computer-readable recording medium. Examples of the computer-readable recording medium are a magnetic recording apparatus, an optical disk, a magneto-optical disk and a semiconductor memory.

To distribute the program, a portable recording medium on which the program is recorded, such as an optical disk or a semiconductor memory, are marketed. In addition, the program may be stored in a storage device of a server computer so that the program can be transferred from the server computer to other computers via a network.

A computer which executes the program stores in its storage device, for example, the program recorded on the portable recording medium or the program transferred from the server computer. The computer reads the program from the storage device and executes processing based on the program. In addition, the computer can also directly read the program from the portable recording medium and execute processing based on the program. Inaddition, each time a program is transferred from the server computer to the computer, the computer may also sequentially execute processing the program.

The present invention contains subject matter related to Japanese Patent Application JP 2005-170788 filed in the Japanese Patent Office on June 10, 2005, the entire contents of which being incorporated herein by reference.

It should be understood by those skilled in the art that various modifications, combinations, sub-combinations and alterations may occur depending on design requirements and other factors insofar as they are within the scope of the appended claims or the equivalents thereof.

**Claims**

1. An image processing apparatus for processing an image signal, comprising:

   integration means for acquiring the image signal during each detection period having a length equal to or longer than one cycle of flicker occurring on an image under illumination of a fluorescent lamp, and integrating the acquired image signal in a unit of period equal to one horizontal synchronization period or longer; and
   flicker detection means for estimating a flicker component on the basis of a frequency analysis result obtained in the unit of the each detection period by using an integral result obtained by the integration means.

2. An image processing apparatus according to claim 1, further comprising:

   reference signal output means for generating a reference signal which gives timing for the each detection period, irrespective of a present picture rate of the image signal, on the basis of an enable signal indicative of an image signal effective period in a vertical direction for a picture rate at which a picture switching cycle is longer than one cycle of flicker, and supplying the reference signal to the integration means and the flicker detection means.

3. An image processing apparatus according to claim 1 or 2, wherein:

   in a case where the detection period spreads over a plurality of frames or a plurality of fields, the integration means outputs a value interpolated from an integral result obtained before and after a vertical blanking period within the detection period, as an integral result during the vertical blanking period.

4.  An image processing apparatus according to claim 1 or 2, wherein:

   in a case where the detection period spreads over a plurality of frames or a plurality of fields, the integration means continues to output the same value as an integral result obtained immediately before a vertical blanking period within the detection period, during the vertical blanking period.

5.  An image processing apparatus according to claim 1 or 2, wherein:

   in a case where the detection period spreads over a plurality of frames or a plurality of fields, the integration means continues to output a constant value as an integral result during a vertical blanking period within the detection period.

6.  An image processing apparatus according to any one of the preceding claims, further comprising:

   correction means for correcting the image signal so as to cancel the flicker component estimated by the flicker detection means.

7.  An image processing apparatus according to claim 6, further comprising:

   buffer means for temporarily storing an estimated result of the flicker component by the flicker detection means during the each detection period and sequentially supplying data stored during the each detection period to the correction means.

8.  An image processing apparatus according to claim 6 or 7, further comprising:

   buffer means for, in a case where the detection period spreads over a plurality of frames or a plurality of fields, temporarily holding an estimated result of the flicker component by the flicker detection means in a frame unit or a field unit with the estimated result being optimized in phase, selecting a storage area of a frame unit or a field unit corresponding to an image signal inputted to the correction means, and sequentially supplying data of the storage area to the correction means.

9.  An image processing apparatus according to any one of the preceding claims wherein:

   the flicker detection means normalizes an integral value supplied from the integration means or a difference value between integral values respectively obtained during adj acent detection periods, outputs a normalized integral value or a normalized difference value, extracts a spectrum of the normalized integral value or the normalized difference value, and estimates the flicker component from the spectrum.

10. An image processing apparatus according to claim 9, wherein:

   the flicker detection means normalizes the difference value by dividing the difference value by an average value of integral values obtained during a plurality of successive detection periods.

11. An image processing apparatus according to claim 9, wherein:

   the flicker detection means normalizes the difference value by dividing the difference value by the integral value.

12. An image capture apparatus for capturing an image by using an XY address type of solid-state image capture device, comprising:

   integrationmeans for acquiring an image signal obtained by image capture, during each detection period having a length equal to or longer than one cycle of flicker occurring on an image under illumination of a fluorescent lamp, and integrating the acquired image signal in a unit of period equal to one horizontal synchronization period or longer; and
   flicker detection means for estimating a flicker component on the basis of a frequency analysis result obtained in the unit of the each detection period by using an integral result obtained by the integration means.

13. An image processing method for detecting flicker occurring on an image under illumination of a fluorescent lamp, comprising:

acquiring an image signal during each detection period having a length equal to or longer than one cycle of the flicker;
integrating the acquired image signal in a unit of period equal to one horizontal synchronization period or longer; and
estimating a flicker component on the basis of a frequency analysis result obtained in the unit of the each detection period by using an integral result obtained by the integrating.

14. An image processing apparatus for processing an image signal, comprising:

an integrator configured to acquire the image signal during each detection period having a length equal to or longer than one cycle of flicker occurring on an image under illumination of a fluorescent lamp, and integrate the acquired image signal in a unit of period equal to one horizontal synchronization period or longer; and
a flicker detector configured to estimate a flicker component on the basis of a frequency analysis result obtained in the unit of the each detection period by using an integral result obtained by the integrator.

## FIG. 1

EP 1 732 313 A1

# FIG. 2

EP 1 732 313 A1

# FIG. 3

Timing diagram showing signals VD, ESTIMATED FLICKER WAVEFORM, VEN1, VCOUNT, DETECT_EN, and SAMPLED FLICKER WAVEFORM.

- Top: 1 / 60 [s] span; inner span 1 / 100 [s]
- VD: pulses
- EFFECTIVE DATA AREA / EFFECTIVE DATA AREA
- ESTIMATED FLICKER WAVEFORM
- VEN1
- VCOUNT: CountUp  1, 2, ···    Reset  ···, T_fk, ···  M-1, M, 0, 0,,,,,  0, 1, ····   CountUp
- DETECT_EN
- SAMPLED FLICKER WAVEFORM

EP 1 732 313 A1

# FIG. 4

VD

1/120 [s]

1 / 100 [s]

EFFECTIVE DATA AREA

EFFECTIVE DATA AREA

EFFECTIVE DATA AREA

ESTIMATED FLICKER WAVEFORM

VEN1

CountUp    Reset    CountUp    Reset    CountUp

VCOUNT    1, 2, ····    M-1, M, 0,,,,,    0, 1, ····    M-1, M, 0,,,,,,    0, 1, ····

(T_fk)

SAMPLED FLICKER WAVEFORM

EP 1 732 313 A1

# FIG. 5

VD

EFFECTIVE DATA AREA

EFFECTIVE DATA AREA

EFFECTIVE DATA AREA

1/120 [s]

1 / 100 [s]

ESTIMATED FLICKER WAVEFORM

VEN1

VEN2

VCOUNT

CountUp

Reset

CountUp

1, 2, ····

····,T_fk, ···

M-1, M, 0,,,,, 0, 1, ····

DETECT_EN

SAMPLED FLICKER WAVEFORM

EP 1 732 313 A1

# FIG. 6

EP 1 732 313 A1

# FIG. 7

111

INPUT
VIDEO
SIGNAL

In' (x,y)

201
LINE INTEGRAL
OPERATION
SECTION

202
BLANK
INTERPOLATION
SECTION

INTEGRAL VALUE
HOLDING SECTION

AVERAGE VALUE
OPERATION
SECTION

DIFFERENCE
OPERATION
SECTION

HEN

VEN1

# FIG. 8

In' (x,y)

150
OPERATION
SECTION

In(x,y)

21
INTERNAL
REFERENCE
SIGNAL
GENERATION
SECTION

VCOUNT

140a
BUFFERING
SECTION
(THE UNIT OF
ONE CYCLE)

130
FLICKER
GENERATION
SECTION

Γn(y)

# FIG. 9

In' (x,y) → OPERATION SECTION 150 → In(x,y) →

21 INTERNAL REFERENCE SIGNAL GENERATION SECTION

FieldCount →

VCOUNT_FIELD →

BUFFERING SECTION (THE UNIT OF ONE SCREEN) 140b

130 FLICKER GENERATION SECTION

Γn(y)

# FIG. 10

111

INPUT VIDEO SIGNAL In' (x,y) →

201 LINE INTEGRAL OPERATION SECTION →

203 HOLD PROCESSING SECTION →

INTEGRAL VALUE HOLDING SECTION

AVERAGE VALUE OPERATION SECTION

DIFFERENCE OPERATION SECTION

HEN

VEN1

# FIG. 11

1 / 100 [s]

FLICKER WAVEFORM

VEN1

VEN2

# FIG. 12

111

INPUT
VIDEO
SIGNAL

In' (x,y)

201

LINE INTEGRAL
OPERATION
SECTION

204

INTEGRAL VALUE
HOLDING SECTION

AVERAGE VALUE
OPERATION
SECTION

HEN

VEN1

DIFFERENCE
OPERATION
SECTION

# FIG. 13

# FIG. 14

EP 1 732 313 A1

FIG. 15A 60fps

1 / 60 [s]

1 / 100 [s]

VD

T_fk [Line]

M [Line]

$T\_fk = M \times FPS / (2 \times f)$
$FPS \leqq 2 \times f$

FIG. 15B 120fps

1 / 120 [s]

1 / 100 [s]

VD

T_fk [Line]

M [Line]

$T\_fk = M \times FPS / (2 \times f)$
$FPS > 2 \times f$

**European Patent Office**

**EUROPEAN SEARCH REPORT**

Application Number

EP 06 25 2852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 091 571 A (MATSUSHITA ELECTRIC INDUSTRIAL CO., LTD) 11 April 2001 (2001-04-11) * abstract; figures 1-4 * * page 6, line 26 - page 7, line 38 * ----- | 1-14 | INV. H04N5/235 |
| X | PATENT ABSTRACTS OF JAPAN vol. 2003, no. 12, 5 December 2003 (2003-12-05) -& JP 2004 222228 A (SONY CORP), 5 August 2004 (2004-08-05) * abstract * | 1-14 | |
| P,X | & EP 1 566 962 A (SONY CORPORATION) 24 August 2005 (2005-08-24) * abstract; figures 1,4 * * column 12, line 39 - column 16, line 40 * ----- | 1-14 | |
| X | EP 1 324 598 A (SHARP KABUSHIKI KAISHA) 2 July 2003 (2003-07-02) * abstract; figure 1 * * page 8, line 10 - line 54 * ----- | 1-14 | TECHNICAL FIELDS SEARCHED (IPC) |
| X | EP 1 496 690 A (SONY CORPORATION) 12 January 2005 (2005-01-12) * abstract; figure 8 * * column 22, line 49 - column 29, line 9 * ----- | 1,12-14 | H04N |
| A | US 6 295 085 B1 (MUNSON BILL ET AL) 25 September 2001 (2001-09-25) * abstract; figure 5 * ----- | 1,12-14 | |

The present search report has been drawn up for all claims

| Place of search | Date of completion of the search | Examiner |
|---|---|---|
| Munich | 22 August 2006 | Schinnerl, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 732 313 A1**

## ANNEX TO THE EUROPEAN SEARCH REPORT
## ON EUROPEAN PATENT APPLICATION NO.

EP 06 25 2852

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2006

| Patent document cited in search report | | Publication date | Patent family member(s) | | Publication date |
|---|---|---|---|---|---|
| EP 1091571 | A | 11-04-2001 | CA | 2322593 A1 | 08-04-2001 |
| | | | CN | 1292623 A | 25-04-2001 |
| | | | US | 6710818 B1 | 23-03-2004 |
| JP 2004222228 | A | 05-08-2004 | AU | 2003302113 A1 | 15-06-2004 |
| | | | EP | 1566962 A1 | 24-08-2005 |
| | | | WO | 2004047427 A1 | 03-06-2004 |
| | | | US | 2006055823 A1 | 16-03-2006 |
| EP 1566962 | A | 24-08-2005 | AU | 2003302113 A1 | 15-06-2004 |
| | | | WO | 2004047427 A1 | 03-06-2004 |
| | | | JP | 2004222228 A | 05-08-2004 |
| | | | US | 2006055823 A1 | 16-03-2006 |
| EP 1324598 | A | 02-07-2003 | CN | 1437389 A | 20-08-2003 |
| | | | JP | 2003198932 A | 11-07-2003 |
| | | | TW | 586323 B | 01-05-2004 |
| | | | US | 2003142239 A1 | 31-07-2003 |
| EP 1496690 | A | 12-01-2005 | CN | 1577040 A | 09-02-2005 |
| | | | JP | 2005033616 A | 03-02-2005 |
| | | | US | 2005046704 A1 | 03-03-2005 |
| US 6295085 | B1 | 25-09-2001 | NONE | | |

For more details about this annex : see Official Journal of the European Patent Office, No. 12/82

33

**REFERENCES CITED IN THE DESCRIPTION**

**Patent documents cited in the description**

- JP 2004222228 A
- JP 2005170788 A